(19) Europäisches Patentamt
European Patent Office
Office européen des brevets

(11) **EP 4 459 751 A1**

(12) **EUROPEAN PATENT APPLICATION**
published in accordance with Art. 153(4) EPC

(43) Date of publication:
**06.11.2024 Bulletin 2024/45**

(21) Application number: **22916127.8**

(22) Date of filing: **27.12.2022**

(51) International Patent Classification (IPC):
**H01M 10/658** (2014.01)     **H01M 10/613** (2014.01)
**H01M 10/625** (2014.01)

(52) Cooperative Patent Classification (CPC):
**F16L 59/04; H01M 10/0525; H01M 10/613;**
**H01M 10/625; H01M 10/6555; H01M 10/658;**
**Y02E 60/10**

(86) International application number:
**PCT/JP2022/048318**

(87) International publication number:
**WO 2023/127905 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.12.2021 JP 2021214814**
**09.05.2022 JP 2022077192**

(71) Applicant: **IBIDEN CO., LTD.**
**Ogaki-shi, Gifu 503-8604 (JP)**

(72) Inventors:
• **SHIMADA Shohei**
**Ibi-gun, Gifu 501-0695 (JP)**
• **JIMBO Naoyuki**
**Ibi-gun, Gifu 501-0695 (JP)**

(74) Representative: **Hoffmann Eitle**
**Patent- und Rechtsanwälte PartmbB**
**Arabellastraße 30**
**81925 München (DE)**

(54) **HEAT TRANSFER SUPPRESSING SHEET, AND BATTERY ASSEMBLY**

(57)     To further improve a shape retention property, strength, compression properties, and the like required for a heat transfer suppression sheet, and to prevent the shape retention property, the strength, the compression properties, and the like of the entire sheet from decreasing even when thermal runaway occurs in a battery cell, by improving dispersibility of a fiber and a particle and further improving a particle retention performance of the fiber. A heat transfer suppression sheet contains: a fiber component; and a particle component, in which a main component of a first inorganic fiber (1) contained in the fiber component and a main component of a first inorganic particle (2) contained in the particle component have a same kind, and a content of the main component in the first inorganic particle (2) is larger than a content of the main component in the first inorganic fiber (1).

*FIG.1*

EP 4 459 751 A1

**Description**

TECHNICAL FIELD

The present invention relates to a battery pack to be a power source for an electric motor that drives, for example, an electric vehicle or a hybrid vehicle, and a heat transfer suppression sheet for use in a battery pack.

BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

For the battery cells, a lithium ion secondary battery, which has a higher capacity and is capable of higher output than a lead-acid battery, a nickel-metal hydride battery, or the like, is mainly used. However, when thermal runaway occurs in one battery cell due to an internal short circuit, an overcharge, or the like in the battery (that is, in the case of "abnormality of a battery cell"), propagation of heat to other adjacent battery cells may cause thermal runaway in other adjacent battery cells

As a technique of suppressing the propagation of heat from the battery cell in which thermal runaway has occurred as described above, a heat transfer suppression sheet is interposed between the battery cells. For example, Patent Literature 1 describes a heat transfer suppression sheet containing a fiber and silica aerogel. In addition, Patent Literature 2 describes a heat transfer suppression sheet containing at least one of a mineral-based powder and a flame retardant, and a matrix resin as an organic binder selected from a thermosetting resin, a thermoplastic elastomer, and a rubber.

CITATION LIST

PATENT LITERATURE

Patent Literature 1: JP2017-215014A
Patent Literature 2: JP2018-206605A

SUMMARY OF INVENTION

TECHNICAL PROBLEM

Here, the heat transfer suppression sheet is required to well retain s particle that has a heat transfer suppression effect (that is, suppress powder falling), and in Patent Literature 1, the silica aerogel is retained by the fiber. At this time, in order to improve the retention performance, it is widely practiced to use an organic binder.

In the production of the heat transfer suppression sheet, it is widely practiced to heat and pressurize a wet sheet obtained by dehydrating an aqueous slurry containing a fiber and a particle through a filtration mesh. At this time, the polarity of the fiber and the particle in the aqueous slurry greatly influences the dispersibility of both. When an organic binder is contained, the affinity between the organic binder and the fiber and the affinity between the organic binder and the particle greatly influence the binding property. As a result, in the obtained heat transfer suppression sheet, the fiber and the particle are unevenly distributed, resulting in a decrease in particle retention performance and a decrease in strength of the entire sheet.

In addition, when thermal runaway occurs in a battery cell, the cell temperature can rise rapidly and reach nearly 1000°C. However, when an organic binder is used, the organic binder melts and disappears once the temperature reaches a high temperature during the thermal runaway, and the shape retention property, the strength, the compression properties, and the like of the entire sheet are greatly decreased.

The present invention has been made in view of the above problems, and an object thereof is to further improve a shape retention property, strength, compression properties, and the like required for a heat transfer suppression sheet, and to prevent the shape retention property, the strength, the compression properties, and the like of the entire sheet from decreasing even when thermal runaway occurs in a battery cell, by improving dispersibility of a fiber and a particle and further improving a particle retention performance of the fiber.

SOLUTION TO PROBLEM

The above object of the present invention is achieved by the following configuration [1] relating to a heat transfer suppression sheet.

[1] A heat transfer suppression sheet containing:

a fiber component; and
a particle component, in which
a main component of a first inorganic fiber contained in the fiber component is the same kind as a main component of a first inorganic particle contained in the particle component, and
a content of the main component of the first inorganic particle is larger than a content of the main component of the first inorganic fiber.
Preferred embodiments of the present invention relating to the heat transfer suppression sheet relate to the following [2] to [15].

[2] The heat transfer suppression sheet according to [1], in which the main component is silica.
[3] The heat transfer suppression sheet according to [1] or [2], in which the first inorganic fiber is a glass fiber, and the first inorganic particle is a silica particle.
[4] The heat transfer suppression sheet according to any one of [1] to [3], in which the fiber component contains a second inorganic fiber having a glass transition point higher than a glass transition point of the first inorganic fiber and the first inorganic particle.
[5] The heat transfer suppression sheet according to [4], in which the first inorganic fiber has an average fiber diameter larger than an average fiber diameter of the second inorganic fiber.
[6] The heat transfer suppression sheet according to [4] or [5], in which the first inorganic fiber has an average fiber length larger than an average fiber length of the second inorganic fiber.
[7] The heat transfer suppression sheet according to any one of [4] to [6], in which the first inorganic fiber has a degree of crimp smaller than a degree of crimp of the second inorganic fiber.
[8] The heat transfer suppression sheet according to any one of [4] to [7], in which the first inorganic fiber is linear or acicular, and the second inorganic fiber is dendritic or curly.
[9] The heat transfer suppression sheet according to any one of [4] to [8], in which

the first inorganic fiber is an amorphous fiber, and
the second inorganic fiber is composed of at least one selected from an amorphous fiber and a crystalline fiber.

[10] The heat transfer suppression sheet according to any one of [4] to [9], in which the second inorganic fiber is composed of at least one kind of fiber selected from an alumina fiber, a mullite fiber, an alumina silicate fiber, a carbon fiber, a silicon carbide fiber, a natural mineral-based fiber, and a zirconia fiber.
[11] The heat transfer suppression sheet according to any one of [1] to [10], in which the particle component contains a second inorganic particle having a glass transition point higher than the glass transition point of the first inorganic fiber and the first inorganic particle.
[12] The heat transfer suppression sheet according to [11], in which the second inorganic particle is composed of at least one kind of particle selected from a titania particle, a zirconia particle, a zircon particle, and a barium titanate particle.
[13] The heat transfer suppression sheet according to any one of [4] to [12], in which

an inorganic particle constituting the particle component is uniformly dispersed,
the first inorganic fiber is uniformly dispersed and oriented in one direction parallel to a main surface of the sheet, and
the second inorganic fiber is intertwined with the first inorganic fiber to form a three-dimensional web structure.

[14] The heat transfer suppression sheet according to [13], in which the second inorganic fiber has a heat conductivity of 41 [W/m·K] or less.
[15] The heat transfer suppression sheet according to [13] or [14], in which a total content of the first inorganic fiber and the second inorganic fiber is 5 mass% or more and 30 mass% or less with respect to a total mass of the heat transfer suppression sheet.
The above object of the present invention is also achieved by the following configuration [16] relating to a battery pack.
[16] A battery pack including:

a plurality of battery cells connected in series or in parallel; and
the heat transfer suppression sheet according to any one of [1] to [15].

ADVANTAGEOUS EFFECTS OF INVENTION

Since the heat transfer suppression sheet according to the present invention contains the main component of the first inorganic fiber which is the same kind as the main component of the first inorganic particle, the affinity between the two materials is improved, the dispersibility during production is good, uneven distribution in the sheet is eliminated, and the retention performance for the first inorganic particle of the first inorganic fiber is improved. In addition, the fiber components are entangled to form a three-dimensional network (also referred to as a web structure). As result, the shape retention property, the strength, the compression properties, and the like of the entire sheet are further improved.

Preferably, when the second inorganic fiber and the second inorganic particle which have a glass transition point higher than that of the first inorganic fiber and the first inorganic particle are further contained, even when thermal runaway occurs in the battery cell, the first inorganic fiber and the first inorganic particle, which have a relatively low glass transition point, vitrify (soften) and function as a binder. At the same time, the second inorganic fiber and the second inorganic particle which have a relatively high glass transition point remain in the heat transfer suppression sheet. Therefore, even when thermal runaway occurs in the battery cell, the entire sheet can maintains the shape retention property, the strength, the compression properties, and the like.

In the battery pack according to the present invention, the above heat transfer suppression sheet is used. Therefore, the battery pack according to the present invention maintains a stable operation, and even when thermal runaway occurs in the battery cell, damages can be suppressed to the minimum.

BRIEF DESCRIPTION OF DRAWINGS

[Fig. 1] Fig. 1 is an SEM photograph of a cross section of a heat transfer suppression sheet according to a first embodiment of the present invention immediately after production (during normal use).
[Fig. 2] Fig. 2 is an SEM photograph of a cross section of the heat transfer suppression sheet according to the first embodiment of the present invention when heated to 800°C.
[Fig. 3] Fig. 3 is an SEM photograph of a cross section of the heat transfer suppression sheet according to the first embodiment of the present invention when heated to 1000°C.
[Fig. 4] Fig. 4 is a cross-sectional view schematically showing a battery pack including the heat transfer suppression sheet according to the first embodiment.
[Fig. 5] Fig. 5 is a schematic diagram showing a configuration of a heat transfer suppression sheet according to a second embodiment of the present invention.

DESCRIPTION OF EMBODIMENTS

Hereinafter, a heat transfer suppression sheet and a battery pack according to an embodiment of the present invention will be described in detail with reference to the drawings. Note that the present invention is not limited to the embodiments described below, and can be freely changed and implemented without departing from the gist of the present invention.

[1. Heat Transfer Suppression Sheet]

(First Embodiment)

A heat transfer suppression sheet according to a first embodiment of the present invention contains:

a fiber component; and
a particle component, in which
a main component of a first inorganic fiber contained in the fiber component is the same kind as a main component of a first inorganic particle contained in the particle component, and
a content of the main component of the first inorganic particle is larger than a content of the main component of the first inorganic fiber.

Note that, in the present invention, the "main component" is a component that accounts for 50 mass% or more

EP 4 459 751 A1

of all components constituting one material. The main component accounts for preferably 60 mass% or more, more preferably 70 mass% or more, still more preferably 80 mass% or more, and even more preferably 90 mass% or more

Since the main component of the first inorganic fiber is the same kind as the main component of the first inorganic particle, affinity between the two materials is high, dispersibility during production is good, and uneven distribution in the obtained heat transfer suppression sheet is eliminated. Therefore, a retention performance for the first inorganic particle of the first inorganic fiber is improved.

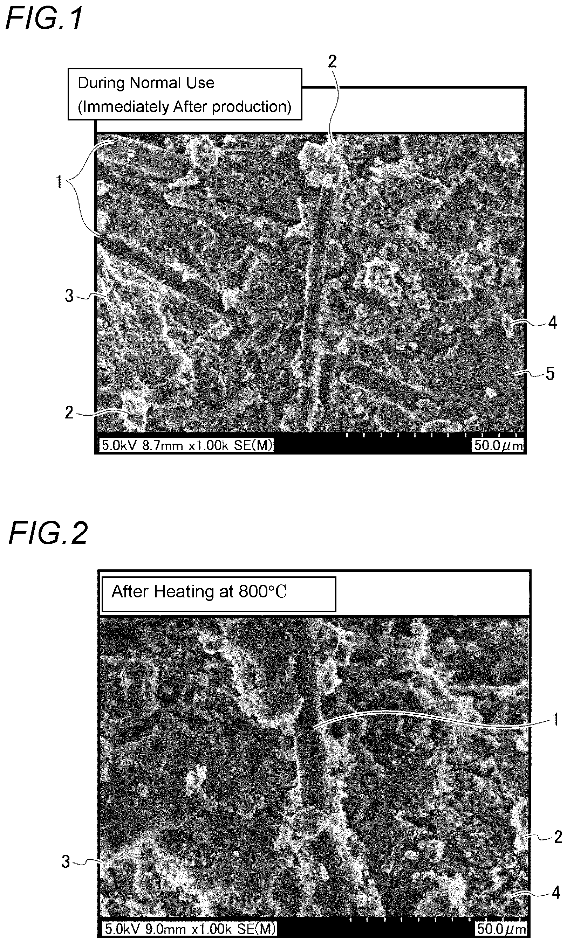

Hereinafter, the heat transfer suppression sheet according to the first embodiment of the present invention will be described in detail. Fig. 1 is an SEM photograph of a cross section of the heat transfer suppression sheet according to the first embodiment of the present invention immediately after production (during normal use).

As shown in Fig. 1, the fiber component contains a first inorganic fiber 1 and the particle component contains a first inorganic particle 2. In addition, in the present embodiment, the fiber component contains a second inorganic fiber 3 having a glass transition point higher than that of the first inorganic fiber 1 and the first inorganic particle 2. Further, the particle component contains a second inorganic particle 4 having a glass transition point higher than that of the first inorganic fiber 1 and the first inorganic particle 2. Furthermore, an organic binder 5 enters between the first inorganic fiber 1, the first inorganic particle 2, the second inorganic fiber 3, and the second inorganic particle 4 to bind each other.

(First Inorganic Fiber)

The first inorganic fiber 1 contained in the fiber component is preferably an amorphous fiber, and a glass fiber, glass wool, slag wool, rock wool, an alkaline earth silicate fiber, a refractory ceramic fiber, a basalt fiber, and a soluble fiber can be suitably used. These may be used alone or in combination in plural kinds thereof. Among them, an inorganic fiber having a melting point of lower than 700°C is preferred, and many amorphous inorganic fibers can be used. Particularly, the main component is preferably a silica-containing fiber having an excellent heat insulation property, and more preferably a glass fiber because of being inexpensive, easily available, and having excellent handling properties.

(First Inorganic Particle)

The main component of the first inorganic particle 2 contained in the particle component is the same kind as the main component of the first inorganic fiber 1. As described above, since the main component of the first inorganic fiber 1 is preferably a silica-containing fiber, it is preferable that the first inorganic particle 2 is also a silica particle whose main component is the same kind of silica. In addition, the content of the silica in the glass fiber is lower than the content of the silica (silica purity) in the silica particle since various materials are mixed to be processed into a fiber.

It is also preferable to use a large-diameter particle and a small-diameter particle in combination. When the small-diameter inorganic particle enters gaps between the large-diameter inorganic particles, a more dense structure is formed, and the strength of the heat transfer suppression sheet can be further improved.

(Second Inorganic Fiber)

The fiber component may contain the second inorganic fiber 3. The second inorganic fiber 3 is composed of at least one selected from a crystalline fiber and an amorphous fiber which has a glass transition point higher than that of the first inorganic fiber 1 and the first inorganic particle 2. The second inorganic fiber 3 preferably has a glass transition point of 1000°C or higher, and many crystalline inorganic fibers can be used. Note that, the melting point of the crystalline inorganic fiber is usually higher than the glass transition point of the amorphous inorganic fiber. Therefore, when the first inorganic fiber 1 and the first inorganic particle 2 are exposed to a high temperature, the surfaces thereof soften before the second inorganic fiber 3.

On the other hand, during thermal runaway of battery cells, even when the first inorganic fiber 1 and the first inorganic particle 2 soften and melt, the second inorganic fiber 3 having a relatively high glass transition point can remain within the sheet, maintain the sheet shape, and continue to be present between the battery cells. Therefore, the softened first inorganic fiber 1 binds the second inorganic particle 4 to be described later, the second inorganic fiber 3, or the like, and can improve the mechanical strength of a heat transfer suppression sheet 10. In addition, since the second inorganic fiber 3 remains without melting or softening even when exposed to a high temperature, minute spaces remain between the second inorganic fiber 3 and the second inorganic particle 4, and if there are the first inorganic fiber 1 and the first inorganic particle 2 left, the minute spaces remain between the second inorganic fiber 3 and the first inorganic fiber 1 or the first inorganic particle 2. Then, air exhibits a heat insulation effect, and an excellent heat transfer suppression performance can be exhibited.

As the second inorganic fiber 3, specifically, an alumina fiber, a mullite fiber, an alumina silicate fiber, a carbon fiber, a silicon carbide fiber, a natural mineral-based fiber such as wollastonite, and a zirconia fiber can be suitably used. These fibers may be used alone or in combination in plural kinds thereof. Among them, one having a melting point of

5

higher than 1000°C can be suitably used since, even when the battery cell experiences thermal runaway, the second inorganic fiber 3 does not melt or soften and can maintain the shape.

Even when the second inorganic fiber 3 is amorphous, any fiber having a glass transition point higher than that of the first inorganic fiber 1 can be used. For example, a glass fiber having a glass transition point higher than that of the first inorganic fiber 1 may be used as the second inorganic fiber 3.

Note that, as described above, the first inorganic fiber 1 has a glass transition point lower than that of the second inorganic fiber 3, and when exposed to a high temperature, the first inorganic fiber 1 softens first. Therefore, the first inorganic fiber 1 can bind the second inorganic particle 4 and the second inorganic fiber 3. However, for example, in the case where the second inorganic fiber 3 is amorphous and has a fiber diameter smaller than the fiber diameter of the first inorganic fiber 1, when the glass transition points of the first inorganic fiber 1 and the second inorganic fiber 3 are close to each other, the second inorganic fiber 3 may soften first. Therefore, when the second inorganic fiber 3 is an amorphous fiber, the glass transition point of the second inorganic fiber 3 is preferably 100°C or more, and more preferably 300°C or more, higher than the glass transition point of the first inorganic fiber 1.

(Second Inorganic Particle)

The particle component may contain the second inorganic particle 4 having a glass transition point higher than that of the first inorganic fiber 1 and the first inorganic particle 2. The kind of the second inorganic particle 4 is not particularly limited, and an oxide particle, a carbide particle, and a nitride particle can be used. Among them, it is preferable to use an oxide particle, and it is preferable that the glass transition point is 1000°C or higher. An oxide particle has a high refractive index and has a high effect of diffusely reflecting light, so that when the oxide particle is used as the second inorganic particle 4, radiant heat transfer can be suppressed, particularly in a high temperature range with abnormal heat generation or the like. Specifically, a titania particle, a zirconia particle, a zircon particle, a barium titanate particle, a zinc oxide particle, an alumina particle, and the like can be suitably used. Among them, a titania particle is preferred. A titania particle has a high refractive index compared to other metal oxides, and has a high effect of diffusely reflecting light and blocking radiant heat in a high temperature range of 500°C or higher. Therefore, it is preferable for improving the heat resistance of the heat transfer suppression sheet. That is, it is particularly preferable to use a silica particle as the first inorganic particle 2 and a titania particle as the second inorganic particle 4.

These particles may be used alone or in combination in plural kinds thereof. When two or more kinds of inorganic particles having mutually different heat transfer suppression effects are combined, a heating element can be cooled in multiple stages and a heat absorption effect can be exhibited in a wider temperature range. Note that, in the case of using plural kinds of particles in combination, similar to the first inorganic particle, it is preferable to use a large-diameter particle and a small-diameter particle in combination, and the small-diameter inorganic particle enters gaps between the large-diameter inorganic particles, leading to a more dense structure, the heat transfer suppression effect can be improved, and the strength can be improved.

In the case where either or both of the first inorganic particle 2 and the second inorganic particle 4 are oxide particles, since the particle diameter of the oxide particle may influence an effect of reflecting radiant heat, when an average primary particle diameter thereof is limited to a specific range, an even higher heat insulation property can be obtained.

That is, when the average primary particle diameter of the oxide particle is 0.001 $\mu$m or more, a wavelength thereof is sufficiently larger than a wavelength of light that contributes to heating, and it diffusely reflects the light efficiently. Therefore, in a high temperature range of 500°C or higher, the radiant heat transfer of heat within the sheet can be suppressed, and the heat insulation property can be further improved. On the other hand, when the average primary particle diameter of the oxide particle is 50 $\mu$m or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

In the case of using two or more kinds of oxide particles, it is also preferable to use a large-diameter particle and a small-diameter particle (nanoparticle) in combination. In this case, the average primary particle diameter of the large-diameter particle is more preferably 1 $\mu$m or more and 50 $\mu$m or less, still more preferably 5 $\mu$m or more and 30 $\mu$m or less, and most preferably 10 $\mu$m or less. Note that in the present invention, the average primary particle diameter can be determined by observing particles with a microscope, comparing the particles with a standard scale, and taking an average of any 10 particles. The nanoparticle will be described later.

Note that, the second inorganic fiber and the second inorganic particle preferably have a higher glass transition point in order to have response property in a higher temperature.

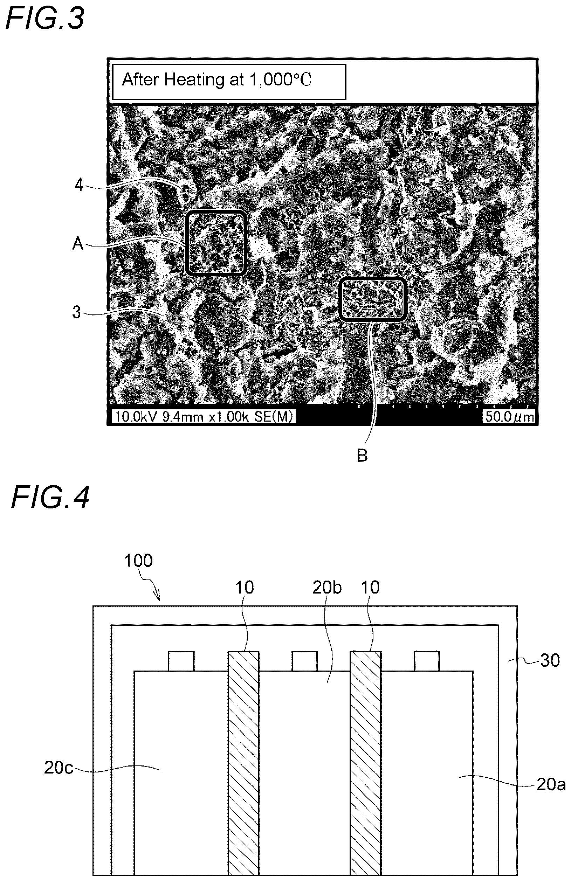

The effects obtained by containing the second inorganic fiber 3 and the second inorganic particle 4 will be described below using Fig. 1 to Fig. 4. Fig. 2 is an SEM photograph of a cross section of the heat transfer suppression sheet according to the first embodiment of the present invention when heated to 800°C. Fig. 3 is an SEM photograph of a cross section of the heat transfer suppression sheet according to the first embodiment of the present invention when heated to 1000°C. Fig. 4 is a cross-sectional view schematically showing a battery pack including the heat transfer suppression sheet according to the first embodiment.

As shown in Fig. 4, the heat transfer suppression sheet 10 according to the present embodiment is used in, for example, a battery pack 100. Specifically, the battery pack 100 includes a plurality of battery cells 20a, 20b, and 20c arranged in parallel, connected in series or in parallel, and stored in a battery case 30. The heat transfer suppression sheet 10 can be interposed between the battery cells 20a, 20b, and 20c, for example.

When thermal runaway occurs in the battery cell (abnormality of a battery cell), the heat transfer suppression sheet is heated to a high temperature, the organic binder 5 having a low melting point firstly disappears (see Fig. 2 showing the heat transfer suppression sheet after heating to 800°C), and there is a risk that the shape retention property, the strength, the compression properties, and the like of the entire sheet remarkably decrease. Then, the temperature further rises and when it is higher than the glass transition point of the first inorganic fiber 1 and the first inorganic particle 2, which have a relatively low glass transition point, the first inorganic fiber 1 and the first inorganic particle 2 vitrify (soften) and become film-like and function as a binder instead of the disappeared organic binder 5, which contributes to the shape retention property, the strength, the compression properties, and the like of the entire sheet.

Thereafter, even when the temperature rises, the second inorganic fiber 3 and the second inorganic particle 4 having a relatively high glass transition point remain in the heat transfer suppression sheet (see Fig. 3 showing the heat transfer suppression sheet after heating to 1000°C). In addition, as shown in a part A and a part B in Fig. 3, the first inorganic fiber 1 and the first inorganic particle 2 soften and deform, and are spread so as to fill the gaps between the second inorganic fiber 3 and the second inorganic particle 4. Therefore, the entire sheet can maintain the shape retention property, the strength, the compression properties, and the like. At the same time, minute spaces are maintained between the second inorganic fibers 3, between the second inorganic particles 4, and between the second inorganic fiber 3 and the second inorganic particle 4, and in these spaces, air exhibits a heat insulation effect, and an excellent heat transfer suppression performance is exhibited.

(Shapes of First Inorganic Fiber and Second Inorganic Fiber)

The first inorganic fiber and the second inorganic fiber preferably have the shapes shown below.

In the present invention, an inorganic fiber having a large average fiber diameter (large diameter) has an effect of improving the mechanical strength and the shape retention property of the heat transfer suppression sheet. When any one of the first inorganic fiber 1 and the second inorganic fiber 3 has a large diameter, the above effect can be obtained. Since external impacts may act on the heat transfer suppression sheet, the containing of a large-diameter inorganic fiber improves the impact resistance. External impacts include, for example, a pressing force due to expansion of battery cells, or a wind pressure due to ignition of battery cells.

In addition, in order to further improve the mechanical strength and the shape retention property, it is particularly preferable that the large-diameter inorganic fiber is linear or acicular. Note that a linear or acicular fiber refers to a fiber having a degree of crimp, which will be described later, of, for example, less than 10%, and preferably 5% or less.

More specifically, in order to improve the mechanical strength and the shape retention property of the heat transfer suppression sheet 10, the average fiber diameter of the large-diameter inorganic fiber is preferably 1 $\mu$m or more, and more preferably 3 $\mu$m or more. However, when the large-diameter inorganic fiber is too thick, the moldability and the processability into a heat transfer suppression sheet may decrease. Therefore, the average fiber diameter is preferably 20 $\mu$m or less, and more preferably 15 $\mu$m or less.

In addition, the fiber length of the large-diameter inorganic fiber is preferably 100 mm or less since when it is too long, the moldability and the processability may decrease. Further, the fiber length of the large-diameter inorganic fiber is preferably 0.1 mm or more since when it is too short, the shape retention property and the mechanical strength decrease.

On the other hand, an inorganic fiber having a small average fiber diameter (small diameter) has an effect of improving the retention property for the inorganic particle, and increasing the flexibility of the heat transfer suppression sheet 10. Therefore, when the other one of the first inorganic fiber and the second inorganic fiber has a small diameter, the above effect can be obtained.

More specifically, in order to improve the retention property for the inorganic particle, it is preferable that a small-diameter inorganic fiber is easily deformable and has flexibility. Therefore, the average fiber diameter of the small-diameter inorganic fiber is preferably less than 1 $\mu$m, and more preferably 0.1 $\mu$m or less. However, when the small-diameter inorganic fiber is too thin, the small-diameter inorganic fiber is easily broken, and the ability to retain the inorganic particle decreases. In addition, a large proportion of fibers remain entangled in the heat transfer suppression sheet 10 without retaining the inorganic particle, and in addition to a decrease in ability to retain the inorganic particle, the moldability and the shape retention property also become poor. Therefore, the average fiber diameter of the small-diameter inorganic fiber is preferably 1 nm or more, and more preferably 10 nm or more

In addition, the fiber length of the small-diameter inorganic fiber is preferably 0.1 mm or less since when it is too long, the moldability and the shape retention property decrease. Further, the fiber length of the small-diameter inorganic fiber is preferably 1 μm or more since when it is too short, the shape retention property and the mechanical strength decrease.

Further, the small-diameter inorganic fiber is preferably dendritic or curly. Having such a shape, the small-diameter inorganic fiber is entangled with the large-diameter inorganic fiber and the inorganic particle in the heat transfer suppression sheet. Therefore, the ability to retain the inorganic particle is improved. In addition, when the heat transfer suppression sheet is subjected to a pressing force or a wind pressure, the small-diameter inorganic fiber is suppressed from slipping and moving, thereby improving the mechanical strength, particularly against an external pressing force or impact.

Note that dendritic refers to a two-dimensionally or three-dimensionally branched structure, for example, feather shape, tetrapod shape, radial shape, or three-dimensional mesh shape. When the small-diameter inorganic fiber is dendritic, the average fiber diameter can be obtained by measuring the diameters of a trunk and branches at several points using an SEM and calculating the average value thereof.

In addition, curly refers to a structure in which the fibers are bent in various directions. As one method of quantifying the curly form, it is known to calculate the degree of crimp from an electron micrograph, which can be calculated according to the following equation, for example.

$$\text{Degree of crimp (\%)} = (\text{fiber length - distance between fiber ends})/(\text{fiber length}) \times 100$$

Here, both the fiber length and the distance between fiber ends are measured values on an electron micrograph. That is, the fiber length and the distance between fiber ends are values obtained by projection onto a two-dimensional plane, and are shorter than actual values. Based on this equation, the degree of crimp of the small-diameter inorganic fiber is preferably 10% or more, and more preferably 30% or more. When the degree of crimp is small, the ability to retain the first inorganic particle and the second inorganic particle decreases, and entanglement (network) between the large-diameter inorganic fibers and with the large-diameter inorganic fiber is difficult to form.

As described above, it is preferable that the average fiber diameter of either the first inorganic fiber 1 or the second inorganic fiber 3 is larger than the average fiber diameter of the other one. In the present invention, it is more preferable that the average fiber diameter of the first inorganic fiber 1 is larger than the average fiber diameter of the second inorganic fiber 3. When the first inorganic fiber 1 has a large average fiber diameter, the first inorganic fiber 1 having a low glass transition point softens early, and thus becomes film-like and hardens as the temperature rises. On the other hand, when the second inorganic fiber 3 has a small average fiber diameter, even when the temperature rises, the small-diameter second inorganic fiber 3 remains in the form of fiber, so that the structure of the heat transfer suppression sheet can be retained and powder falling can be prevented.

In the present invention, when the first inorganic fiber 1 has a large average fiber diameter and the second inorganic fiber 3 has a small average fiber length, it is more preferable that the average fiber length of the first inorganic fibers 1 is larger than the average fiber length of the second inorganic fibers 3, and it is more preferable that the degree of crimp of the first inorganic fiber 1 is smaller than the degree of crimp of the second inorganic fiber 3.

Note that, it is most preferable that both a large-diameter linear or acicular inorganic fiber and a small-diameter dendritic or curly inorganic fiber are used as the first inorganic fiber 1, and both a large-diameter linear or acicular inorganic fiber and a small-diameter dendritic or curly inorganic fiber are used as the second inorganic fiber 3, since the retention effect for the first inorganic particle 2 and the second inorganic particle 4, the mechanical strength, and shape retention property can be further improved.

In addition, when the average fiber length of the first inorganic fiber 1 is larger than that of the second inorganic fiber 3, the orientation length is increased, so that the heat dissipation property is further improved. Further, the second inorganic fiber 3 is dendritic or curly, can thus be easily intertwined with the first inorganic fiber 1, and is effective for a heat transfer path and shape retention.

(Forms of First Inorganic Particle and Second Inorganic Particle)

In addition, it is preferable that the first inorganic particle 2 and the second inorganic particle 4 have the following forms.

Both the first inorganic particle 2 and the second inorganic particle 4 are not particularly limited in form and size, and preferably include at least one selected from a nanoparticle, a hollow particle, and a porous particle. When the average secondary particle diameter thereof is 0.01 μm or more, both the first inorganic particle 2 and the second inorganic particle 4 are easily available and an increase in production cost can be suppressed. When the average secondary particle diameter is 200 μm or less, a desired heat insulation effect can be obtained. Therefore, the average secondary particle diameter of the first inorganic particle 2 and the second inorganic particle 4 is preferably 0.01 $\mu$m or more and 200 $\mu$m or less, and more preferably 0.05 $\mu$m or more and 100 $\mu$m or less.

Among the particle component in the heat transfer suppression sheet 10, it is more preferable that a nanoparticle is contained as at least one particle component. The nanoparticle refers to a nanometer-order particle having a spherical or nearly spherical shape and having an average primary particle diameter of less than 1 $\mu$m. The nanoparticle has a low density and thus have an effect of suppressing conductive heat transfer Therefore, when the nanoparticle is used, voids are further finely dispersed, so that an excellent heat insulation property of suppressing the convective heat transfer can be obtained. Therefore, the conduction of heat between adjacent nanoparticles can be suppressed during normal use of a battery in a normal temperature range. Note that, for example, when the nanoparticle is used as the first inorganic particle 2, components other than the main component are not particularly limited as long as the above definition of the nanoparticle is met and the main component same as the first inorganic fiber 1 is contained.

When the average primary particle diameter of the nanoparticle is limited to a specific range, an even higher heat insulation property can be obtained. That is, when the average primary particle diameter of the nanoparticle is 1 nm or more and 100 nm or less, the convective heat transfer and the conductive heat transfer of the heat within the heat transfer suppression sheet can be suppressed particularly in a temperature range of lower than 500°C, and the heat insulation property can be further improved. In addition, even when a compressive stress is applied, voids remaining between the nanoparticles and contact points between many particles can suppress the conductive heat transfer, and the heat insulation property of the heat transfer suppression sheet can be maintained. Note that the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

In the case where either or both of the first inorganic particle 2 and the second inorganic particle 4 are oxide particles, when a nanoparticle having a small average primary particle diameter is used as the oxide particle, even when the heat transfer suppression sheet 10 is compressed by expansion due to thermal runaway of the battery cell and the internal density increases, an increase in conductive heat transfer of the heat transfer suppression sheet 10 can be suppressed. This is thought to be because the nanoparticle tends to form fine voids between particles due to a repulsive force caused by static electricity, and the bulk density thereof is low, so that it is filled with the particle to provide a cushioning property.

As the nanoparticle, for example, a since silica nanoparticle is a material having a high heat insulation property and has a few contact points between particles, the amount of heat conducted by the silica nanoparticles is smaller than that in a case of using a silica particle having a large particle diameter. In addition, since a generally available silica nanoparticle has a bulk density of about 0.1 g/cm$^3$, for example, even when battery cells disposed on both sides of the heat transfer suppression sheet thermally expand and a large compressive stress is applied to the heat transfer suppression sheet, the size (area) or the number of contact points between the silica nanoparticles does not increase remarkably, and the heat insulation property can be maintained. Therefore, it is preferable to use the silica nanoparticle as the silica particle, which is the first inorganic particle. As the silica nanoparticle, wet silica, dry silica, aerogel, or the like can be used.

As described above, titania has a high effect of blocking the radiant heat, and a silica nanoparticle has extremely low conductive heat transfer, and even when a large compressive stress is applied to the heat transfer suppression sheet 10, an excellent heat insulation property can be maintained. Therefore, most preferably, both a titania particle and a silica nanoparticle are used as the first inorganic particle 2 and the second inorganic particle 4.

(Contents of First Inorganic Fiber, First Inorganic Particle, Second Inorganic Fiber, and Second Inorganic Particle in Heat Transfer Suppression Sheet)

In the first embodiment, with respect to the total mass of the heat transfer suppression sheet 10, the content of the first inorganic particle 2 is preferably 25 mass% or more and 80 mass% or less, and the content of the second inorganic particle 4 is preferably 1 mass% or more and 30 mass% or less. As described above, since the first inorganic fiber 1 and the first inorganic particle 2 replace the organic binder 5 when the organic binder 5 disappears, it is preferable that the content thereof is equal to or larger than that of the organic binder 5. Note that, the content of the organic binder 5 is preferably 5 mass% or more and less than 25 mass% in consideration of a binding performance.

In addition, the content of the first inorganic fiber 1 is preferably 3 mass% or more and 30 mass% or less, and more preferably 5 mass% or more and 15 mass% or less. The content of the second inorganic fiber 3 is preferably 3 mass% or more and 30 mass% or less, and more preferably 5 mass% or more and 15 mass% or less. Since first inorganic fiber 1 is entangled with the second inorganic fiber 3 to form a three-dimensional network to retain the first inorganic particle 2, the second inorganic particle 4, and other blending materials to be described later, when the content is less than the above, such effects cannot be sufficiently obtained.

(Other Blending Materials)

The heat transfer suppression sheet according to the present invention may contain, if necessary, materials contained in the heat transfer suppression sheet in the related art, such as other inorganic particles different from the first inorganic particle 2 and the second inorganic particle 4, other inorganic fibers different from the first inorganic fiber 1 and the second inorganic fiber 3, an organic fiber, and an organic binder. All of these are useful for reinforcing the heat transfer suppression sheet 10 and improving the moldability, and the total amount thereof is preferably 10 mass% or less with respect to the total mass of the heat transfer suppression sheet 10.

As the inorganic fiber different from the first inorganic fiber and the second inorganic fiber, an aerogel composite material or the like can be used.

As the organic fiber, a cellulose fiber or the like can be used.

Note that, these fibers may be used alone or in combination in two or more kinds thereof.

As the organic binder, a polymer aggregate, an acrylic emulsion, and the like, which have been used in the related art in a heat transfer suppression sheet, can be appropriately used.

As other inorganic particles, mica, a microporous particle, a thermally expandable inorganic material, aerogel, and an inorganic hydrate particle can be used. Note that, examples of the thermally expandable inorganic material include vermiculite, bentonite, mica, and perlite. Further, as an organic particle, a hollow polystyrene particle or the like can be used.

Among them, an inorganic hydrate particle is preferred. The inorganic hydrate particle exhibits a so-called "heat absorption effect" that the inorganic hydrate particle receives heat from a heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide ($Al(OH)_3$), magnesium hydroxide ($Mg(OH)_2$), calcium hydroxide ($Ca(OH)_2$), zinc hydroxide ($Zn(OH)_2$), iron hydroxide ($Fe(OH)_2$), manganese hydroxide ($Mn(OH)_2$), zirconium hydroxide ($Zr(OH)_2$), and gallium hydroxide ($Ga(OH)_3$).

For example, aluminum hydroxide has about 35% crystal water, and as shown in the following formula, thermally decomposes to release the crystal water and exhibits a heat absorption effect. Then, after releasing the crystal water, aluminum hydroxide forms alumina ($Al_2O_3$), which is a porous material, and functions as a heat insulation material.

$$2Al(OH)_3 \rightarrow Al_2O_3 + 3H_2O$$

Note that, as will be described later, a battery pack according to the present invention preferably includes the heat transfer suppression sheet 10 interposed between battery cells, and in a battery cell in which thermal runaway has occurred, the temperature rapidly rises to over 200°C and continues to rise to about 700°C. Therefore, it is preferable that the inorganic particle is composed of an inorganic hydrate whose thermal decomposition start temperature is 200°C or higher.

Note that, the thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell in which thermal runaway has occurred, and can effectively prevent the temperature rise. Therefore, these are preferred inorganic hydrates.

In the case where the inorganic hydrate particle is used, when the average particle diameter thereof is too large, it takes a certain amount of time for the inorganic hydrate near the center of the heat transfer suppression sheet to reach the thermal decomposition temperature thereof, so that the inorganic hydrate particle near the center of the heat transfer suppression sheet may not be completely thermally decomposed. Therefore, the average secondary particle diameter of the inorganic hydrate particle is preferably 0.01 μm or more and 200 μm or less, and more preferably 0.05 μm or more and 100 μm or less.

Further, it is also preferable to contain a hydrous porous material as the inorganic particle. Specific examples of the hydrous porous material include zeolite, kaolinite, montmorillonite, acid clay, diatomaceous earth, wet silica, dry silica, aerogel, mica, and vermiculite.

It is also preferable to use a combination of plural kinds of the above hydrous porous materials. In addition, it is also preferable to provide a layer containing a larger amount of the hydrous porous material on the surface in order to suppress the temperature rise.

The total amount of other blending materials is preferably 10 mass% or less with respect to the total mass of the heat transfer suppression sheet.

<Method for Producing Heat Transfer Suppression Sheet According to First Embodiment>

In the first embodiment, the heat transfer suppression sheet 10 is produced by molding a fiber component, a particle component, and other blending materials using a dry molding method or a wet molding method. As the dry molding method, for example, a press molding method (dry press molding method) and an extrusion molding method (dry extrusion molding method) can be used.

(Production Method Using Dry Press Molding Method)

In the dry press molding method, the fiber component, the particle component, and other blending materials are charged into a mixer such as a V-kind mixer at a predetermined ratio. Then, the materials charged into the mixer are sufficiently mixed, and then the mixture is charged into a predetermined mold and press-molded to obtain a heat transfer suppression sheet. During the press molding, heating may be performed if necessary.

Note that, the press pressure during the press molding is preferably in a range of 0.98 MPa or more and 9.80 MPa or less. When the press pressure is less than 0.98 MPa, the obtained heat transfer suppression sheet may not be able to maintain the strength and may collapse. On the other hand, when the press pressure is more than 9.80 MPa, the processability may decrease due to excessive compression, or due to an increase in bulk density, solid heat transfer may increase and the heat insulation property may decrease.

In the case of using the dry press molding method, it is preferable to use an ethylene-vinyl acetate copolymer (EVA) as the organic binder, and any organic binder that is generally used in the case of using the dry press molding method can be used without particular limitation.

(Production Method Using Dry Extrusion Molding Method)

In the dry extrusion molding method, the fiber component, the particle component, and other blending materials are added to water at a predetermined ratio and kneaded using a kneader, to prepare a paste. Thereafter, the obtained paste is extruded from a slit-shaped nozzle using an extrusion molding machine and further dried to obtain a heat transfer suppression sheet. In the case of using the dry extrusion molding method, it is preferable to use methylcellulose, water-soluble cellulose ether, or the like as the organic binder, and any organic binder that is generally used in the case of using the dry extrusion molding method can be used without particular limitation.

(Production Method Using Wet Molding Method)

In the wet molding method, the fiber component, the particle component, and other blending materials are added to water at a predetermined ratio, mixed in water, and stirred using a stirrer, to prepare a mixed liquid. Thereafter, the obtained mixed liquid is dehydrated through a filtration mesh to prepare a wet sheet. Thereafter, the obtained wet sheet is heated and pressurized, whereby a heat transfer suppression sheet can be obtained.

Note that, before the heating and pressurizing step, a ventilation drying treatment may be performed in which hot air is passed through the wet sheet to dry the sheet, or the wet sheet may be heated and pressurized in a wet state without being subjected to the ventilation drying treatment. In addition, in the case of using the wet molding method, a cationized starch or an acrylic resin can be selected as the organic binder.

As described above, when the heat transfer suppression sheet 10 contains the second inorganic fiber, it is preferable that the first inorganic fiber is entangled with the second inorganic fiber to form a three-dimensional network. A second embodiment having a three-dimensional network formed by inorganic fibers will be described with reference to the drawings. Hereinafter, a structure having a three-dimensional network will be referred to as a three-dimensional web structure.

(Second Embodiment)

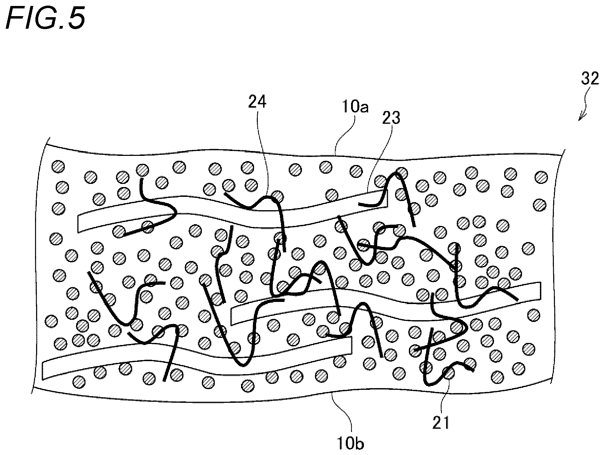

Fig. 5 is a schematic diagram showing a configuration of a heat transfer suppression sheet according to the second embodiment of the present invention.

In a heat transfer suppression sheet 32 according to the second embodiment,

(1) an inorganic particle 21 constituting the particle component is uniformly dispersed,
(2) the first inorganic fiber 23 is uniformly dispersed and oriented in one direction parallel to a main surface of the sheet, and
(3) the second inorganic fiber 24 is intertwined with the first inorganic fiber 23 to form a three-dimensional web structure.

Note that, when the inorganic particle 21 includes plural kinds of inorganic particles, one kind selected from the plural kinds of inorganic particles can be used as the first inorganic particle 2 in the first embodiment. That is, in the second embodiment, the main component of the inorganic particle 21 (first inorganic particle 2) constituting the particle component is the same kind as the main component of the first inorganic fiber 23. In addition, the content of the main component in the first inorganic particle is larger than the content of the main component in the first inorganic fiber 23.

As shown in Fig. 5, in the present embodiment, the first inorganic fibers 23 are oriented in a layered manner in one direction parallel to main surfaces 10a, 10b of the heat transfer suppression sheet 32. In addition, the first inorganic fiber 23 is intertwined with the second inorganic fiber 24 to form a three-dimensional web structure. At the same time, the inorganic particle 21 is uniformly spread and retained in a space between the first inorganic fiber 23 and the second inorganic fiber 24. The inorganic particle 21, the first inorganic fiber 23, and the second inorganic fiber 24 are all heat-resistant materials. In addition, countless minute spaces are formed between the particles, between the particle and the fiber, and between the fibers, and the air also exhibits a heat insulation effect, so that the heat transfer suppression performance is excellent.

Note that, in the present invention, "oriented in one direction" does not necessarily mean that all the first inorganic fibers 23 are oriented in that direction, and it is sufficient that the first inorganic fibers 23 have a strong tendency to line up in one specific direction. It can be determined by visual confirmation that the first inorganic fibers 23 are oriented in a specific direction. When it is difficult to distinguish between fibers, it can be confirmed by measuring the bending strength in the direction and confirming that the bending strength is 5% or more larger than in other directions.

In the present invention, the expression that the inorganic particle 21 and the first inorganic fiber 23 are "uniformly dispersed" indicates that the inorganic particle 21 and the first inorganic fiber 23 are not extremely unevenly distributed but are uniformly dispersed overall.

The materials, shapes, average fiber diameters, and average fiber lengths of the first inorganic fiber 23 and the second inorganic fiber 24 are the same as those of the first inorganic fiber 1 and the second inorganic fiber 3 in the first embodiment. In addition, the kind, form, and particle diameter of the inorganic particle 21 are also the same as those of the first inorganic particle 2 and the second inorganic particle 4 in the first embodiment. It is sufficient that at least one kind of inorganic particle among the inorganic particle 21 corresponds to the first inorganic particle 2 in the first embodiment.

The heat transfer suppression sheet 32 according to the second embodiment can be applied to the battery pack shown in Fig. 4. That is, the heat transfer suppression sheet 32 can be interposed between the battery cells 20a, 20b, and 20c, for example.

In the second embodiment configured as described above, since the main component of at least one kind of inorganic particle is the same kind as the first inorganic fiber 23 and the inorganic particle 21, and the content of the main component in the inorganic particle is larger than the content of the main component in the first inorganic fiber 23, effects similar to those of the first embodiment can be obtained. In addition, in the present embodiment, since the first inorganic fiber 23 is uniformly dispersed and oriented in one direction parallel to the main surface inside the heat transfer suppression sheet 32, the heat insulation property and the heat dissipation property within the sheet are excellent and uniform, and the heat generated from the battery cell can be effectively dissipated. Therefore, even when thermal runaway occurs in a battery cell, heat to adjacent battery cells can be blocked and a chain reaction can be prevented. In addition, the first inorganic fiber 23 is intertwined with the second inorganic fiber 24 to form a three-dimensional web structure, and the second inorganic fiber 24 functions as a heat transfer path connecting the first inorganic fiber the first inorganic fiber. That is, the heat transferred in a thickness direction of the heat transfer suppression sheet 32 by the second inorganic fiber 24 is transferred in a direction parallel to the main surface of the heat transfer suppression sheet 32 by the first inorganic fiber 23, and can be radiated. Further, the three-dimensional web structure provides excellent strength.

(Heat Conductivities of First Inorganic Fiber and Second Inorganic Fiber)

It is preferable that the heat transfer suppression sheet 32 in the second embodiment has an excellent heat insulation performance, and it is preferable that both the first inorganic fiber 23 and the second inorganic fiber 24 have a small heat conductivity. However, it is preferable that the second inorganic fiber 24 has a heat conductivity larger than that of the first inorganic fiber 23 since it serves as a heat transfer path connecting the first inorganic fibers oriented in a layered manner. Therefore, in consideration of the heat insulation performance, the heat conductivity of the second inorganic fiber 24 is preferably 41 [W/m·K] or less.

(Contents of Inorganic Particle, First Inorganic Fiber, and Second Inorganic Fiber)

The content of the inorganic particle 21 is preferably 30 mass% or more and 80 mass% or less with respect to the total mass of the heat transfer suppression sheet 32. The content of the inorganic particle 21 is more preferably 40 mass% or more and 70 mass% or less, and 50 mass% or more and 60 mass% or less.

In addition, the total content of the first inorganic fiber 23 and the second inorganic fiber 24 is preferably 5 mass% or more and 30 mass% or less with respect to the total mass of the heat transfer suppression sheet 32. The total content of the first inorganic fiber 23 and the second inorganic fiber 24 is more preferably 10 mass% or more and 25 mass% or less, and 15 mass% or more and 20 mass% or less.

With such contents, the heat absorption and heat insulation effect of the inorganic particle 21, the shape retention property, the pressing force resistance, and the wind pressure resistance of the first inorganic fiber 23, and the heat transfer path effect and the ability to retain the inorganic particle 21 of the second inorganic fiber 24 are exhibited in a well-balanced manner.

<Method for Producing Heat Transfer Suppression Sheet According to Second Embodiment>

As a method for producing the heat transfer suppression sheet according to the second embodiment, first, the inorganic particle 21, the first inorganic fiber 23, and other blending materials are added to water at a predetermined ratio and kneaded using a kneader, to prepare a paste. Thereafter, the obtained paste is extruded from a slit-shaped nozzle using an extrusion molding machine to obtain a first member. This first member is a sheet-like wet material, in which the first inorganic fibers 23 are oriented in one direction and the inorganic particle 21 is retained between the fibers.

In addition, the inorganic particle 21, the second inorganic fiber 24, and other blending materials are dry mixed at a predetermined ratio and press-molded to obtain a second member. This second member has a sheet shape, in which the second inorganic fibers 24 are randomly present and the inorganic particle 21 is retained between the fibers.

Then, a plurality of first members and second members are laminated alternately, and the whole is press-molded and dried, to obtain the heat transfer suppression sheet 32. During press molding, the second inorganic fibers 24 randomly present in the second member enter the first member in a wet state and are entangled with the first inorganic fibers 23. Then, by drying, such a state is maintained and the heat transfer suppression sheet 32 is obtained.

(Thickness of Heat Transfer Suppression Sheet)

In each of the above embodiments, the thickness of the heat transfer suppression sheet is not particularly limited, and is preferably in a range of 0.05 mm to 6 mm. When the thickness of the heat transfer suppression sheet is 0.05 mm or more, sufficient mechanical strength can be imparted to the heat transfer suppression sheet. On the other hand, when the thickness of the heat transfer suppression sheet is 6 mm or less, good assemblability can be obtained.

(Heat Insulation Performance of Heat Transfer Suppression Sheet)

The heat conductivity can be mentioned as an indicator indicating the heat insulation performance. In each of the above embodiments, the heat conductivity of the heat transfer suppression sheet is preferably less than 1 (W/m·K), more preferably less than 0.5 (W/m·K), and still more preferably less than 0.2 (W/m·K). Further, the heat conductivity is even more preferably less than 0.1 (W/m·K), even still more preferably less than 0.05 (W/m·K), and particularly preferably less than 0.02 (W/m·K). Note that the heat conductivity can be measured in accordance with "Testing method for heat conductivity of refractories" described in JIS R 2251.

[3. Battery Pack]

The configuration of the battery pack is as illustrated in the first embodiment shown in Fig. 4 above. Here, the configuration and effects of the battery pack using the heat transfer suppression sheet 10 according to the first embodiment of the present invention will be specifically described using Fig. 4.

As shown in Fig. 4, the battery pack 100 according to the first embodiment includes the plurality of battery cells 20a, 20b, and 20c arranged in parallel, connected in series or in parallel, and stored in the battery case 30, and the above heat transfer suppression sheet 10 is interposed between the battery cells 20a, 20b, and 20c. Note that, in Fig. 4, the above heat transfer suppression sheet 10 is interposed between the battery cells 20a, 20b, and 20c. However, the heat transfer suppression sheet 10 does not necessarily need to be interposed between the battery cells 20a, 20b, and 20c. For example, the heat transfer suppression sheet 10 may be disposed between the battery cells 20a, 20b, and 20c and the battery case 30, or may be attached to an inner surface of the battery case 30.

In such a battery pack 100, since the heat transfer suppression sheet 10 is interposed between the battery cells 20a, 20b, and 20c, the propagation of heat between the battery cells 20a, 20b, and 20c can be suppressed during normal use.

On the other hand, even when thermal runaway occurs in any of the battery cells 20a, 20b, and 20c, the presence of the heat transfer suppression sheet 10 according to the present embodiment makes it possible to suppress the propagation of heat between the battery cells 20a, 20b, and 20c. Therefore, the chain reaction of the thermal runaway can be inhibited, and an adverse influence on other battery cells can be minimized.

Although not shown, in addition to being interposed between the battery cells 20a, 20b, and 20c, the heat transfer suppression sheet 10 may be attached directly to an inner bottom surface of the battery case 30, or may be disposed in a space between a ceiling surface or a side wall of the battery case 30 and the battery cells 20a, 20b, and 20c. Therefore, high versatility can be obtained, the effect of preventing a chain reaction of the thermal runaway caused by heat propagation between adjacent battery cells can be obtained, and when a certain battery cell ignites, it is also possible to suppress the flame from spreading to the outside of the battery case.

For example, the battery pack according to the present embodiment is used in an electric vehicle (EV) or the like, and is sometimes disposed under a passenger's floor. In this case, even when the battery cell ignites, the safety of the passenger can be ensured. In this case, since the heat transfer suppression sheet interposed between the battery cells can also be disposed between the battery cell and the battery case, it is not necessary to newly prepare a flame retardant material or the like, and a safe battery pack can be easily formed at a low cost.

Further, the heat transfer suppression sheet according to each of the above embodiments can be easily bent, depending on selection of the components and the thickness thereof. Therefore, it is not influenced by the shape of the battery cell, and can be adapted to any shape. Specifically, it can be applied to cylindrical batteries, flat batteries, and the like, in addition to prismatic batteries.

Examples

A "glass fiber" was used as the first inorganic fiber, a "silica nanoparticle" was used as the first inorganic particle, an "alumina fiber" was used as the second inorganic fiber, a "titania particle" was used as the second inorganic particle, and an "acrylic resin" was used as the organic binder. The glass fiber, as the first inorganic fiber, contains 60 mass% of silica, and the silica nanoparticle, as the first inorganic particle, contains 99 mass% of silica, and both contain silica as the main component. In addition, the blending ratio (mass%) was glass fiber: silica nanoparticle: alumina fiber: titania particle: acrylic resin = 10:55: 10: 15: 10.

Then, water was added thereto, followed by mixing in water and stirring with a stirrer, to prepare a mixed liquid. Thereafter, the obtained mixed liquid was dehydrated through a filtration mesh to prepare a wet sheet. Thereafter, the obtained wet sheet was heated and pressurized, whereby a heat transfer suppression sheet was obtained.

A cross section of the heat transfer suppression sheet immediately after production (during normal use) was photographed using an SEM. As shown in Fig. 1, it can be seen that the first inorganic fiber 1 (glass fiber) is entangled with the second inorganic fiber 3 (alumina fiber) to form a three-dimensional network, and the first inorganic particle 2 (silica nanoparticle) and the second inorganic particle (titania particle) 4 are retained. In addition, it can be seen that gaps appear black in the figure, and the organic binder (acrylic resin) 5 has entered and bound them.

Subsequently, the heat transfer suppression sheet was exposed to a high temperature of 800°C assuming thermal runaway of a battery cell, and the cross section thereof was photographed using an SEM. As shown in Fig. 2, it can be seen that the organic binder 5 (acrylic resin) disappears, and the first inorganic fiber 1 (glass fiber), the second inorganic fiber 3 (alumina fiber), the first inorganic particle (silica nanoparticle) 2, and the second inorganic particle (titania particle) 4 remain.

Fig. 3 shows an SEM photograph of the cross section of the heat transfer suppression sheet when the temperature is further raised to 1000°C. It can be seen that the second inorganic fiber (alumina fiber) 3 and the second inorganic particle (titania particle) 4 remain even at this temperature.

However, since the heat transfer suppression sheet is exposed to a high temperature of 1000°C, which is much higher than the glass transition point (Tg: 500°C to 550°C) of the first inorganic fiber (glass fiber) 1 and the first inorganic particle (silica nanoparticle) 2, as shown in the part A and the part B in Fig. 3, it can be seen that the first inorganic fiber (glass fiber) 1 and the first inorganic particle (silica nanoparticle) 2 are softened and deformed. The first inorganic fiber 1 and the first inorganic particle 2 are thought to function as a binder by spreading to fill the gaps between the second inorganic fiber (alumina fiber) 3 and the second inorganic particle (titania particle) 4.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that the present application is based on a Japanese patent application (Japanese Patent Application No. 2021-214814) filed on December 28, 2021 and a Japanese patent application (Japanese Patent Application No. 2022-077192) filed on May 9, 2022, and the contents thereof are incorporated herein by reference.

REFERENCE SIGNS LIST

1, 23 first inorganic fiber
2 first inorganic particle
3, 24 second inorganic fiber
4 second inorganic particle
5 organic binder
10, 32 heat transfer suppression sheet
20a, 20b, 20c battery cell
21 inorganic particle
30 battery case
100 battery pack

**Claims**

1. A heat transfer suppression sheet comprising:

   a fiber component; and
   a particle component, wherein
   a main component of a first inorganic fiber contained in the fiber component is the same kind as a main component of a first inorganic particle contained in the particle component, and
   a content of the main component of the first inorganic particle is larger than a content of the main component of the first inorganic fiber.

2. The heat transfer suppression sheet according to claim 1, wherein the main component is silica.

3. The heat transfer suppression sheet according to claim 1, wherein the first inorganic fiber is a glass fiber, and the first inorganic particle is a silica particle.

4. The heat transfer suppression sheet according to any one of claims 1 to 3, wherein

   an inorganic particle constituting the particle component is uniformly dispersed,
   the first inorganic fiber is uniformly dispersed and oriented in one direction parallel to a main surface of the sheet, and
   the sheet further contains a second inorganic fiber intertwined with the first inorganic fiber to form a three-dimensional web structure.

5. The heat transfer suppression sheet according to claim 4, wherein the second inorganic fiber has a heat conductivity of 41 [W/m·K] or less.

6. The heat transfer suppression sheet according to claim 5, wherein a total content of the first inorganic fiber and the second inorganic fiber is 5 mass% or more and 30 mass% or less with respect to a total mass of the heat transfer suppression sheet.

7. The heat transfer suppression sheet according to claim 1, wherein the particle component contains a second inorganic particle having a glass transition point higher than a glass transition point of the first inorganic fiber and the first inorganic particle.

8. The heat transfer suppression sheet according to claim 7, wherein the second inorganic particle is composed of at least one kind of particle selected from a titania particle, a zirconia particle, a zircon particle, and a barium titanate particle.

9. A battery pack comprising:

   a plurality of battery cells connected in series or in parallel; and

the heat transfer suppression sheet according to any one of claims 1 to 8.

## FIG.1

During Normal Use
(Immediately After production)

5.0kV 8.7mm x1.00k SE(M)        50.0 μm

## FIG.2

After Heating at 800°C

5.0kV 9.0mm x1.00k SE(M)        50.0 μm

## FIG.3

After Heating at 1,000°C

10.0kV 9.4mm x1.00k SE(M)    50.0μm

## FIG.4

FIG.5

## INTERNATIONAL SEARCH REPORT

| International application No. |
| --- |
| **PCT/JP2022/048318** |

**A. CLASSIFICATION OF SUBJECT MATTER**

*H01M 10/658*(2014.01)i; *H01M 10/613*(2014.01)i; *H01M 10/625*(2014.01)i
FI: H01M10/658; H01M10/613; H01M10/625

According to International Patent Classification (IPC) or to both national classification and IPC

**B. FIELDS SEARCHED**

Minimum documentation searched (classification system followed by classification symbols)

H01M10/658; H01M10/613; H01M10/625

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2021-064510 A (IBIDEN CO LTD) 22 April 2021 (2021-04-22) paragraphs [0024]-[0053], fig. 1-4 | 1-3, 7-9 |
| Y | | 4-6 |
| Y | JP 2019-204637 A (IBIDEN CO LTD) 28 November 2019 (2019-11-28) paragraph [0057] | 4-6 |
| P, Y | JP 2022-024233 A (IBIDEN CO LTD) 09 February 2022 (2022-02-09) paragraphs [0032]-[0059], fig. 1-3 | 4-6 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 February 2023** | **14 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/048318**

| Patent document cited in search report | | | Publication date (day/month/year) | Patent family member(s) | | | Publication date (day/month/year) |
|---|---|---|---|---|---|---|---|
| JP | 2021-064510 | A | 22 April 2021 | US | 2022/0367938 | A1 | |
| | | | | paragraphs [0044]-[0098], fig. 1-4 | | | |
| | | | | CN | 114556669 | A | |
| JP | 2019-204637 | A | 28 November 2019 | (Family: none) | | | |
| JP | 2022-024233 | A | 09 February 2022 | WO | 2022/009851 | A1 | |
| | | | | KR | 10-2022-0025197 | A | |
| | | | | CN | 114258608 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017215014 A
- JP 2018206605 A
- JP 2021214814 A
- JP 2022077192 A